# EUROPEAN PATENT APPLICATION

(11) **EP 1 498 970 A2**
(43) Date of publication of application: **19.01.2005**
(21) Application number: 03021825.9
(22) Date of filing: 26.09.2003
(51) Int. Cl.: H01M 8/04

(54) **Humidifying module and its unit cell for fuel cell**

(30) Priority: 10.06.2003 CN 03141308
(71) Applicant: Asia Pacific Fuel Cell Technologies, Ltd., Chunan, Miaoli 350 (TW)
(72) Inventor: Yang, Jefferson YS, 4F 22, Ke-Dung 3 Road Chunan Miaoli 350 (TW); Yang, Te-Chou, 4F 22, Ke-Dung 3 Road Chunan Miaoli 350 (TW); Kao, Mike Pen-Mu, 4F 22, Ke-Dung 3 Road Chunan Miaoli 350 (TW); Hsu, Yao-Sheng, 4F 22, Ke-Dung 3 Road Chunan Miaoli 350 (TW); Cheng, Yaw-Chung, 4F 22, Ke-Dung 3 Road Chunan Miaoli 350 (TW)
(74) Representative: Goddar, Heinz J., Dr.

(57) **Abstract**

A module for humidifying a fuel cell (5) and a unit cell (100) therein. The unit cell includes a first guiding plate (10), a second guiding plate (20), and an intermediate layer (30). The first guiding plate, communicating with the fuel cell, includes a plurality of first grooves (11) so that air flows to the fuel cell via the first grooves. The second guiding plate, communicating with the fuel cell, includes a plurality of second grooves (21) so that gas from the fuel cell flows out of the unit cell via the second grooves. The second grooves face the first grooves. The intermediate layer is disposed between the first guiding plate and the second guiding plate, and prevents the air flowing in the first grooves from mixing with the gas flowing in the second grooves. Water content in the gas flowing in the second grooves is transmitted to the first grooves.

## Description

### BACKGROUND OF THE INVENTION

### Field of the Invention

The invention relates to a module for humidifying a fuel cell and a unit cell for assembling the module; in particular, to a humidifying module and its unit cell that can maintain humidity in a fuel cell.

### Description of the Related Art

Fuel cells have been developed to reduce polluting emissions generated by combustion engines.

In fuel cells, water and electric energy are generated by hydrogen gas reacting with oxygen gas during electrochemical reaction. Generally a fuel cell includes an. anode., a cathode, an electrolyte, and a circuit. Hydrogen gas is introduced into the anode, and oxygen gas (or air) is introduced into the cathode. Hydrogen ions in the anode move to the cathode through the electrolyte, and electrons in the anode move to the cathode through the circuit. Oxygen gas reacts in the cathode so that water is generated and electric energy is released.

Types of fuel cells include an alkaline fuel cell (AFC) , a phosphoric acid fuel cell (PAFC), a solid oxide fuel cell (SOFC), a molten carbonate fuel cell (MCFC), a proton exchange membrane fuel cell (PEMFC). Each type of fuel cell has different advantages, disadvantages, and different areas of application. The design of this invention is based on the proton exchange membrane fuel cell, and a detailed description of the proton exchange membrane fuel cell is described in the following.

A proton exchange membrane, when used as an electrolyte, in a proton exchange membrane fuel cell, requires liquid water to transmit protons (hydrogen ions). However, when cool, dry air enters the hotter fuel cell, most of water content in the proton exchange membrane evaporates due to the temperature differential. Thus, the water content in the proton exchange membrane is dramatically reduced, and protons cannot be effectively transmitted in the proton exchange membrane.

In the conventional proton exchange membrane fuel cell, a device for humidifying air is usually utilized. However, the humidifying device is disposed outside of the fuel cell, and additional power is required to actuate the humidifying device. As a result, the whole system becomes complicated, and its volume and weight increase.

### SUMMARY OF THE INVENTION

In view of this, the invention provides a humidifying module and its unit cell thereof that maintains a predetermined humidity in a fuel cell.

Accordingly, the invention provides a unit cell including a first guiding plate, a second guiding plate, and an intermediate layer. The first guiding plate, communicating with the fuel cell, includes a plurality of first grooves so that air flows to the fuel cell via the first grooves. The second guiding plate, communicating with the fuel cell, includes a plurality of second grooves so that gas from the fuel cell flows out of the unit cell via the second grooves. The second grooves face the first grooves. The intermediate layer is disposed between the first guiding plate and the second guiding plate, and prevents the air flowing in the first grooves from mixing with the gas flowing in the second grooves. Water content in the gas flowing in the second grooves is transmitted to the first grooves.

In a preferred embodiment, the intermediate layer includes a water-permeable layer, a first water-absorbent layer, and a second water-absorbent layer. The water content of the gas, flowing in the second grooves, passes through the water-permeable layer. The first water-absorbent layer is disposed on a surface, facing the second guiding plate, of the water-permeable layer. The water content of the gas, flowing in the second grooves, is absorbed by the first water-absorbent layer. The second water-absorbent layer is disposed on a surface, facing the first guiding plate, of the water-permeable layer. The water content, passing through the water-permeable layer, is absorbed by the second water-absorbent layer.

Furthermore, the first water-absorbent layer and the second water-absorbent layer are adhered to the water-permeable layer. The water-permeable layer is made of material for preventing gas from passing through. The first water-absorbent layer and the second water-absorbent layer are made of a hydrophilic material.

In another preferred embodiment, the intermediate layer is adhered to the first guiding plate and the second guiding plate.

In another preferred embodiment, the first grooves and the second grooves are orthogonal.

In another preferred embodiment, the first guiding plate includes a first opening and a second opening formed in a direction that the first grooves extend. The second guiding plate includes a third opening and a fourth opening corresponding to the first opening and the second opening. Thus, the air flows into the first grooves via the first opening and the third opening, and flows out of the unit cell via the second opening and the fourth opening.

In another preferred embodiment, the second guiding plate includes a fifth opening formed in a direction that the second grooves extend. The first guiding plate includes a sixth opening corresponding to the fifth opening. Thus, the gas from the fuel cell flows into the second grooves via the fifth opening and the sixth opening.

Furthermore, the first guiding plate includes a seventh opening opposite from the sixth opening. Thus, the gas, flowing in the second grooves, flows out of the unit cell via the seventh opening.

In another preferred embodiment, the unit cell further includes an expansion plate. The expansion plate is disposed between the first guiding plate and the second guiding plate, and includes a plurality of third grooves facing the first guiding plate and a plurality of fourth grooves facing the second guiding plate.

Furthermore, the third grooves and the fourth grooves are orthogonal, and the third grooves and the first grooves are orthogonal, and the fourth grooves and the second grooves are orthogonal.

Furthermore, the expansion plate includes an eighth opening and a ninth opening formed in a direction that the third grooves extend, and includes a tenth opening and a eleventh opening formed in a direction that the fourth grooves extend.

In this invention, a module, for humidifying a fuel cell, is provided. The module includes a plurality of unit cells communicating with the fuel cell respectively. The unit cell includes a first guiding plate, a second guiding plate, and an intermediate layer. The first guiding plate, communicating with the fuel cell, includes a plurality of first grooves so that air flows to the fuel cell via the first grooves. The second guiding plate, communicating with the fuel cell, includes a plurality of second grooves so that gas from the fuel cell flows out of the unit cell via the second grooves. The second grooves face the first grooves. The intermediate layer is disposed between the first guiding plate and the second guiding plate, and prevents the air flowing in the first grooves from mixing with the gas flowing in the second grooves. Water content in the gas flowing in the second grooves is transmitted to the first grooves.

In this invention, a unit cell, for humidifying a fuel cell, is provided. The unit cell communicates with a fluid supply source, and includes a first guiding plate, a second guiding plate, and an intermediate layer. The first guiding plate communicates with the fuel cell, and includes a plurality of first grooves so that air flows to the fuel cell via the first grooves. The second guiding plate communicates with the fluid supply source, and includes a plurality of second grooves so that fluid from the fluid supplying device flows out of the unit cell via the second grooves. The second grooves face the first grooves. The intermediate layer is disposed between the first guiding plate and the second guiding plate, and prevents the air flowing in the first grooves from mixing with the fluid flowing in the second grooves. Water content in the fluid flowing in the second grooves is transmitted to the first grooves.

### BRIEF DESCRIPTION OF THE DRAWINGS

The present invention can be more fully understood by reading the subsequent detailed description and examples with references made to the accompanying drawings, wherein:
Fig. 1 is an exploded view of a unit cell for humidifying a fuel cell as disclosed in a first embodiment of this invention;
Fig. 2a is a front view of a first guiding plate in Fig. 1;
Fig. 2b is a rear view of a first guiding plate in Fig. 1;
Fig. 3a is a front view of a second guiding plate in Fig. 1;
Fig. 3b is a rear view of a second guiding plate in Fig. 1;
Fig. 4a is a schematic view of an assembled unit cell in Fig. 1;
Fig. 4b is a cross section along a line b-b in Fig. 4a;
Fig. 4c is a cross section along a line c-c in Fig. 4a;
Fig. 5 is a schematic view of a module for humidifying a fuel cell as disclosed in a first embodiment of this invention;
Fig. 6a is an exploded view of a unit cell for humidifying a fuel cell as disclosed in a second embodiment of this invention;
Fig. 6b is a front view of an expansion plate in Fig. 6a;
Fig. 6c is a rear view of an expansion plate in Fig. 6a;
Fig. 7a is an exploded view of a unit cell for humidifying a fuel cell as disclosed in a third embodiment of this invention;
Fig. 7b is a front view of a first guiding plate in Fig. 7a;
Fig. 7c is a rear view of a first guiding plate and a second guiding plate in Fig. 7a;
Fig. 7d is a front view of a second guiding plate in Fig. 7a;
Fig. 7e is a schematic view of an assembled unit cell in Fig. 7a; and
Fig. 8 is a schematic view of a module for humidifying a fuel cell as disclosed in a third embodiment of this invention.

### DETAILED DESCRIPTION OF THE INVENTION

### Embodiments

### Embodiment 1

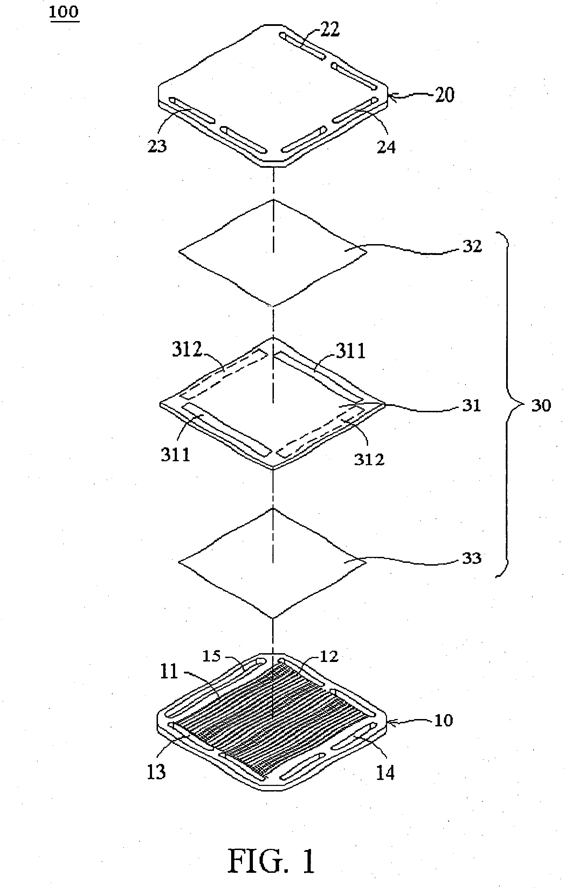

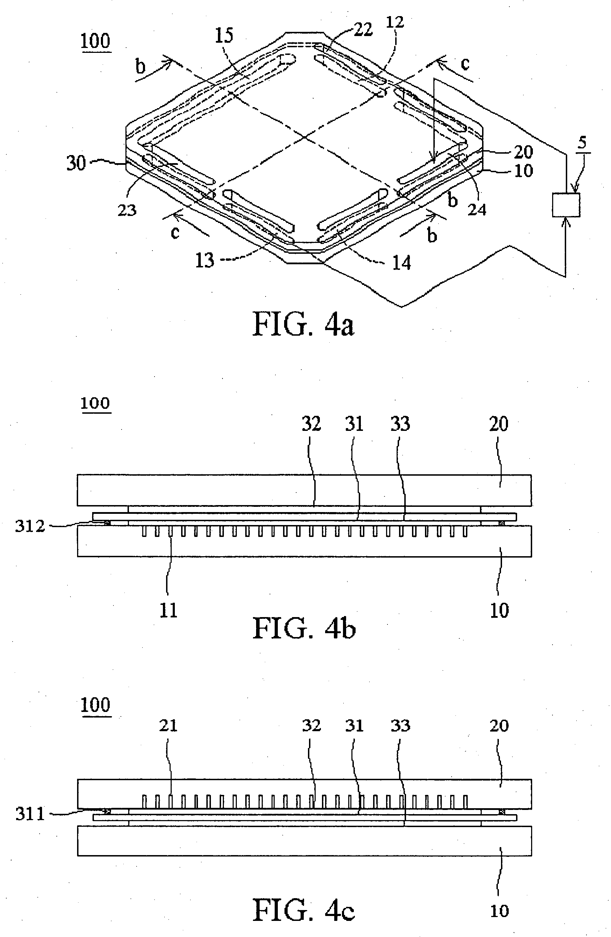

Referring to Figs. 1-4c, a unit cell 100 for humidifying a fuel cell as disclosed in a first embodiment of this invention is shown. The unit cell 100 humidifies air before entering the fuel cell, and includes a first guiding plate 10, a second guiding plate 20, and an intermediate layer 30.

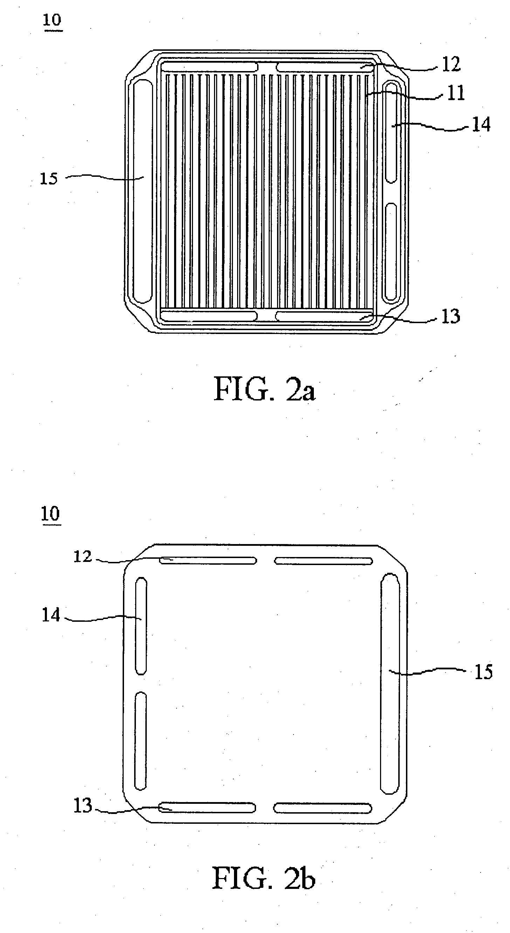

The first guiding plate 10 communicates with the fuel cell 5 as shown in Fig. 4a, and includes a plurality of first grooves 11 at a surface as shown in Fig. 2a. Referring to Fig. 2a and Fig. 2b, the first guiding plate 10 is formed with two first openings 12, two second openings 13, two sixth openings 14, and a seventh opening 15 at its periphery. Dry ambient air enters the fuel cell 5 through the first grooves 11 of the first guiding plate 10. The first openings 12 and the second openings 13 are formed in a direction that the first grooves 11 extend.

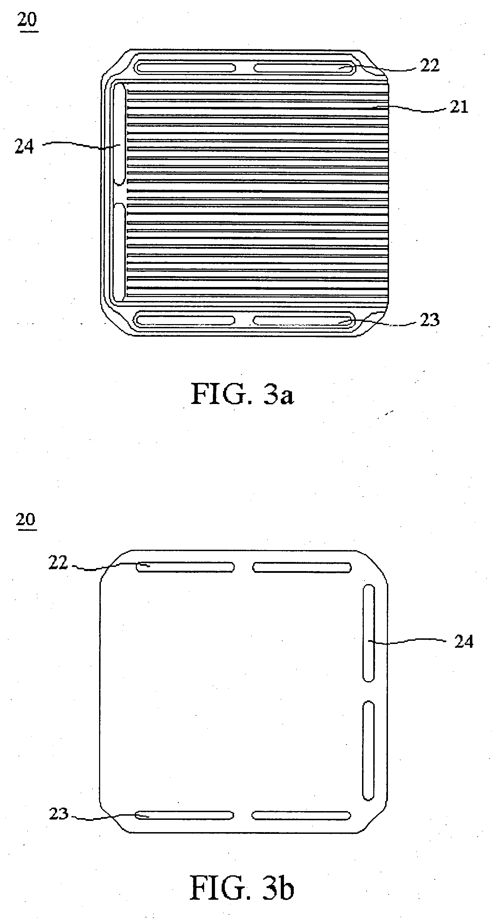

The second guiding plate 20 communicates with the fuel cell 5 as shown in Fig. 4a, and includes a plurality of second grooves 21 at a surface as shown in Fig. 3a. Referring to Fig. 3a and Fig. 3b, the second guiding plate 20 is formed with two third openings 22, two fourth openings 23, and two fifth openings 24 at three sides of its periphery. Exhaust air from the fuel cell 5 flows out of the unit cell 100 through the second grooves 21 of the second guiding plate 20. The third openings 22 correspond to the first openings 12, and the fourth openings 23 correspond to the second openings 13. The fifth openings 24 are formed in a direction that the second grooves 21 extend, and correspond to the sixth openings 14.

Furthermore, referring to Fig. 1, in the unit cell 100, the second guiding plate 20 is disposed in a manner such that the second grooves 21 face the first grooves 11. The first grooves 11 and the second grooves 21 are orthogonal.

Referring to Fig. 4a, by the first guiding plate 10 and the second guiding plate 20, dry ambient air enters the first grooves 11 through the first openings 12 and the third openings 22. Then, dry air flows out of the unit cell 100 via the second openings 13 and the fourth openings 23, and flows into the fuel cell 5. After the air is reacted in the fuel cell 5, it includes lots of vapor and flows out of the fuel cell 5. Finally, after reaction the air enters the second grooves 21 via the fifth openings 24 and the sixth openings 14, and directly flows out of the unit cell 100.

As shown in Fig. 1, the intermediate layer 30 is disposed between the first guiding plate 10 and the second guiding plate 20, and includes a water-permeable layer 31, a first water-absorbent layer 32, and a second water-absorbent layer 33. The water-permeable layer 31 is used as a base of the intermediate layer 30, and is made of material for preventing gas from passing through. Thus, the gas flowing in the first grooves 11 can be prevented from mixing with the gas flowing in the second grooves 21 by the water-permeable layer 31. However, the water content of the gas, flowing in the second grooves 21, can be transmitted to the first grooves 21 through the water-permeable layer 31.

The first water-absorbent layer 32 is disposed on a surface, facing the second guiding plate 20, of the water-permeable layer 31. The first water-absorbent layer 32 is made of a hydrophilic material, and absorbs the water content of the gas flowing in the second grooves 21. The second water-absorbent layer 33 is disposed on a surface, facing the first guiding plate 10, of the water-permeable layer 31. The second water-absorbent layer 33 is made of a hydrophilic material, and absorbs the water content passing through the water-permeable layer 31.

Furthermore, the first water-absorbent layer 32 and the second water-absorbent layer 33 are adhered to the water-permeable layer 31 respectively so as to form the intermediate layer 30. The water-permeable layer 31 is provided with two first adhesive portions 311 and two second adhesive portions 312 at its periphery. By means of the first adhesive portions 311 and the second adhesive portions 312, the intermediate layer 30 can be adhered to the first guiding plate 10 and the second guiding plate 20. It is noted that after the first guiding plate 10 is assembled with the second guiding plate 20, the positions of the first adhesive portions 311 and the second adhesive portions 312 on the water-permeable layer 31 do not interfere with the gas flowing in the first grooves 11 and the second grooves 21.

As stated above, after the ambient air enters the first grooves 11 of the unit cell 100 via the first openings 12 and the third openings 22 by a blower (not shown), it flows out of the unit cell 100 via the second openings 13 and the fourth openings 23 so as to flow to the cathode of the fuel cell 5. After the air passes through the cathode of the fuel cell 5, it re-enters the second grooves 21 of the unit cell 100 via the fifth openings 24 and the sixth openings 14. Then, the air is directly discharged out of the unit cell 100 and into the ambient. It is noted that after the ambient air passes through the cathode of the fuel cell 5, its humidity and temperature increase.

By the above process, before the ambient air enters the fuel cell 5, the water content of the gas with high humidity flowing in the second grooves 21 can be absorbed by the intermediate layer 30. Thus, the ambient air can be humidified.

Thus, since the cool dry air is humidified by the unit cell 100 of this invention before it enters the hotter fuel cell 5, the humidity difference in the proton exchange membrane of the fuel cell can be minimized. As a result, the water content in the proton exchange membrane can be largely prevented from evaporating, and the proton in the proton exchange membrane can be smoothly transmitted, thus ensuring the efficiency of the fuel cell.

In addition, the temperature of the ambient air can be increased by the unit cell. Thus, the efficiency of the fuel cell can be further enhanced.

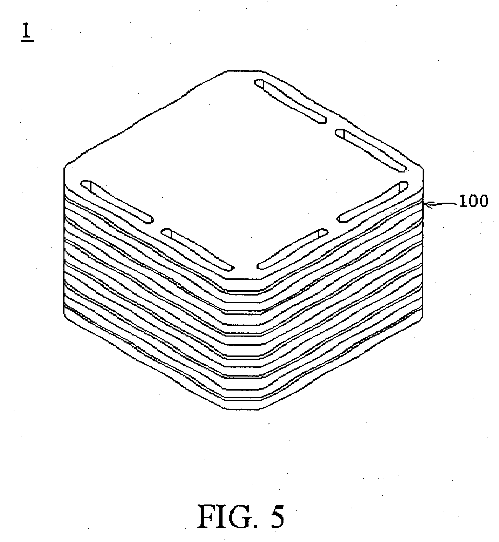

It is understood that in practice, a plurality of unit cells 100 can be assembled into a humidifying module 1 as shown in Fig. 5. Thus, the amount of air entering the fuel cell can be increased.

### Embodiment 2

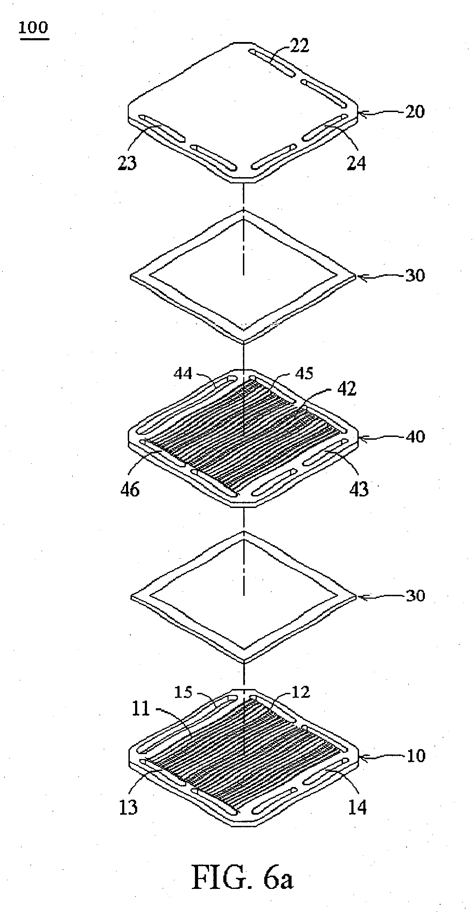

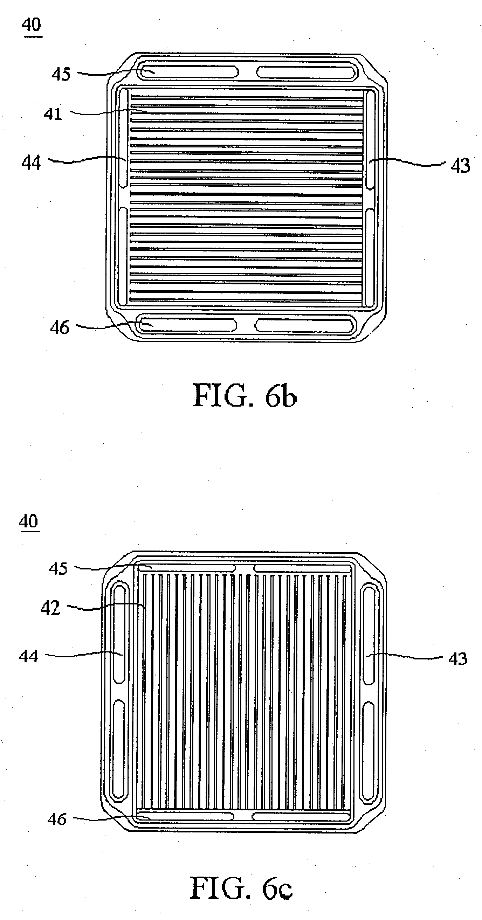

Referring to Figs. 6a-6c, a unit cell 200 for humidifying a fuel cell as disclosed in a second embodiment of this invention is shown. The unit cell 200 includes a first guiding plate 10, a second guiding plate 20, two intermediate layers 30, and an expansion plate 40. It is noted that since the first guiding plate 10, the second guiding plate 20, and the intermediate layers 30 of this embodiment are the same as those of the first embodiment, their description is omitted.

As shown in Fig. 6a, the expansion plate 40 is disposed between the first guiding plate 10 and the second guiding plate 20. One intermediate layer 30 is disposed between the first guiding plate 10 and the expansion plate 40, and another intermediate layer 30 is disposed between the second guiding plate 20 and the intermediate layer 30. Referring to Fig. 6a and Fig. 6b, the expansion plate 40 includes a plurality of third grooves 41 at a side facing the first guiding plate 10, and includes a plurality of fourth grooves 42 at a side facing the second guiding plate 20. The third grooves 41 and the fourth grooves 42 are orthogonal, and the third grooves 41 and the first grooves 11 are orthogonal, and the fourth grooves 42 and the second grooves 21 are orthogonal.

As shown in Fig. 6b and Fig. 6c, the expansion plate 40 includes two eighth openings 43 and two ninth openings 44 extending in the same direction as the third grooves 41, and includes two tenth openings 45 and two eleventh openings 46 formed in a direction that the fourth grooves 42 extend.

As stated above, after the ambient air enters the first grooves 11 and the fourth grooves 42 of the unit cell 200 via the first openings 12, the third openings 22 and the tenth openings 45 by a blower (not shown), it flows out of the unit cell 200 via the second openings 13, the fourth openings 23 and the eleventh openings 46 so as to flow to the cathode of the fuel cell 5. After the air passes through the cathode of the fuel cell 5, it re-enters the second grooves 21 and the third grooves 41 of the unit cell 200 via the fifth openings 24, the sixth openings 14, and the eighth openings 43. The air is evacuated from the unit cell 200 and discharged into the surrounding atmosphere via the seventh openings 15 and the ninth openings 44.

Thus, the effect of the unit cell 100 can also be attained by the unit cell 200 of this embodiment. In addition, the unit cell 200 offers better expansibility is better than the first embodiment, and is more convenient.

It is understood that in practice, more than one expansion plate can be disposed between two guiding plates.

Furthermore, as with the first embodiment, a plurality of unit cells 200 can be assembled into a humidifying module.

### Embodiment 3

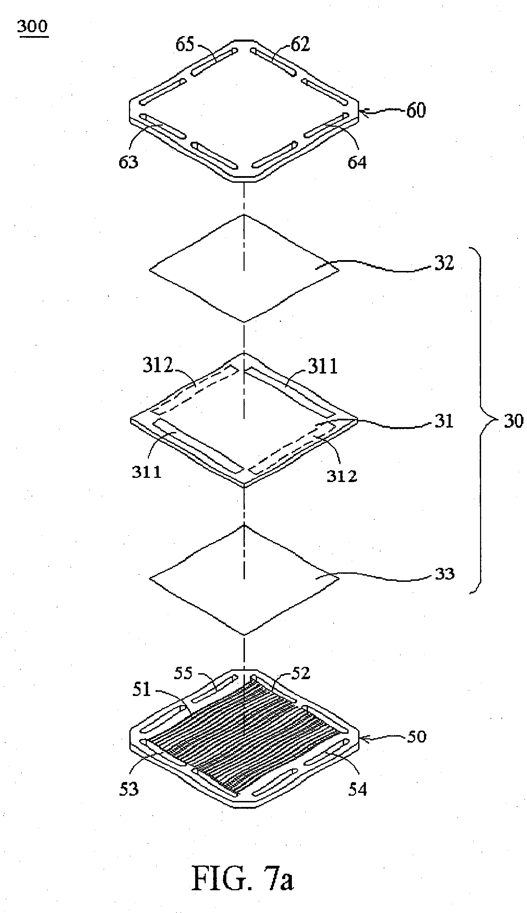

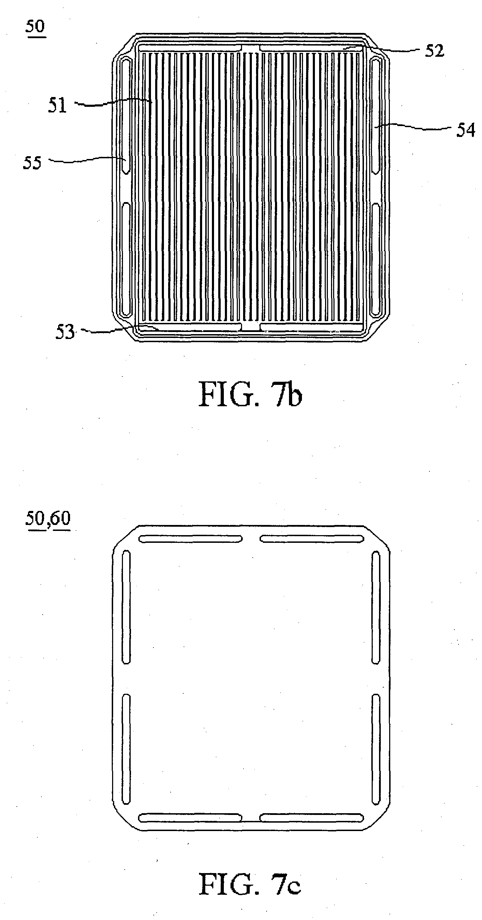

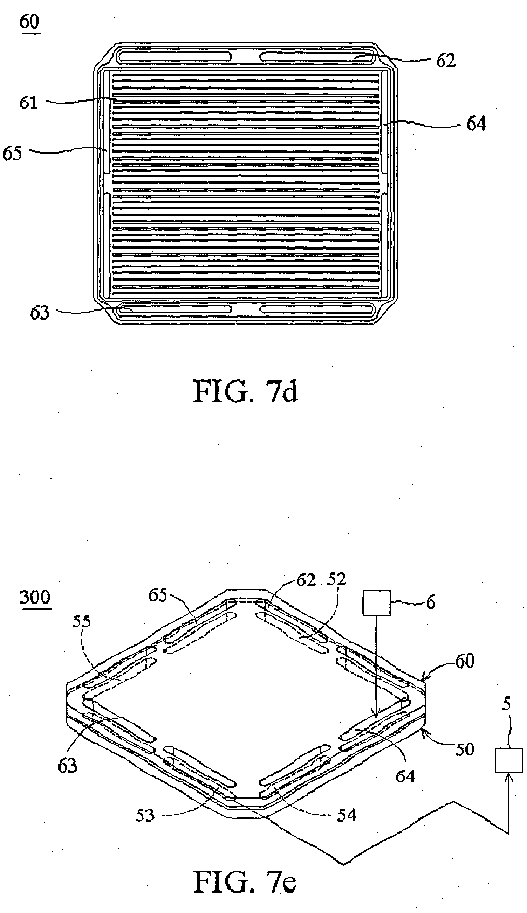

Referring to Figs. 7a-7e, a unit cell 300 for humidifying a fuel cell as disclosed in a third embodiment of this invention is shown. The unit cell 300 includes a first guiding plate 50, a second guiding plate 60, and an intermediate layer 30. It is noted that since the intermediate layer 30 of this embodiment is the same as that of the first embodiment, its description is omitted.

The first guiding plate 50 communicates with the fuel cell 5 as shown in Fig. 7e, and includes a plurality of first grooves 51 at a surface as shown in Fig. 7a. Referring to Fig. 7b, the first guiding plate 50 is formed with two first openings 52, two second openings 53, two sixth openings 54, and two seventh openings 55 at its periphery. Dry ambient air enters the fuel cell 5 through the first grooves 51 of the first guiding plate 50. The first openings 52 and the second openings 53 are formed in a direction that the first grooves 51 extend.

The second guiding plate 60 communicates with a fluid supply source 6 as shown in Fig. 7e, and includes a plurality of second grooves 61 at a surface as shown in Fig. 7d. The second guiding plate 60 is formed with two third openings 62, two fourth openings 63, two fifth openings 64, and two eighth openings 65 at its periphery. Fluid from the fluid supply source 6 flows out of the unit cell 300 through the second grooves 61 of the second guiding plate 60. The third openings 62 correspond to the first openings 52, and the fourth openings 63 correspond to the second openings 53. The fifth openings 64 and the eighth openings 65 are formed in a direction that the second grooves 61 extend, and correspond to the sixth openings 54 and the seventh openings 55.

As stated above, after the ambient air enters the first grooves 61 of the unit cell 300 via the first openings 52 and the third openings 62 by a blower (not shown), it flows out of the unit cell 300 via the second openings 53 and the fourth openings 63 so as to flow to the cathode of the fuel cell 5. After the fluid from the fluid supply source 6 enters the second grooves 61 of the unit cell 300 via the fifth openings 64 and the sixth openings 54, it flows out of the unit cell 300 via the eighth openings 65 and the seventh openings 55.

The difference between this and the first embodiment is that an additional fluid supply source 6 is utilized. Specifically, in the first embodiment, ambient air is humidified by the gas passed through the fuel cell before entering the fuel cell. In contrast, in this embodiment, the ambient air before entering the fuel cell is humidified by the fluid from the fluid supply source. Thus, the selectivity of the fluid for humidifying is enhanced. For example, both the gas and the liquid can be used as the humidifying fluid. As a result, the characteristics of the humidifying fluid, such as the humidity and the temperature, can be obtained properly so that the humidifying effect can be achieved. However, since the fluid supply source is additionally disposed, the space occupied by the device is larger than that of the first embodiment.

Furthermore, the first guiding plate and the second guiding plate of this embodiment can be replaced with those of the first embodiment.

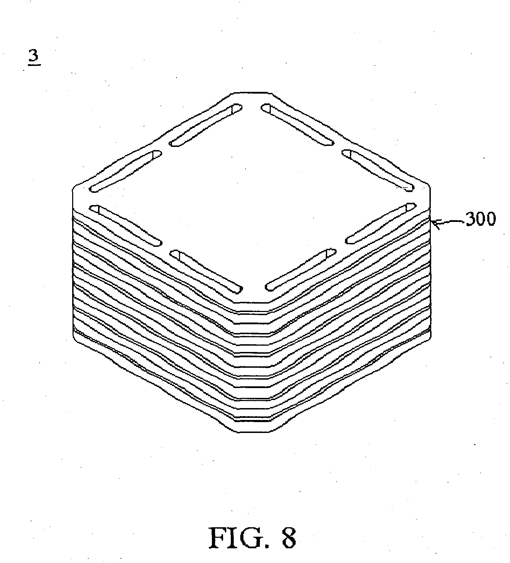

Furthermore, as with the first embodiment, a plurality of unit cells 300 can be assembled into a humidifying module 3 as shown in Fig. 8.

Furthermore, like the second embodiment, the expansion plate can be disposed in the unit cell 300 so as to enhance the expansibility.

While the invention has been described by way of example and in terms of the preferred embodiments, it is to be understood that the invention is not limited to the disclosed embodiments. To the contrary, it is intended to include various modifications and similar arrangements (as would be apparent to those skilled in the art). Therefore, the scope of the appended claims should be accorded the broadest interpretation so as to encompass all such modifications and similar arrangements.

The features disclosed in the foregoing description, in the claims and/or in the accompanying drawings may, both separately and in any combination thereof, be material for realising the invention in diverse forms thereof.

## Claims

1. A unit cell for humidifying a fuel cell, comprising:
a first guiding plate, communicating with the fuel cell, including a plurality of first grooves so that air flows to the fuel cell via the first grooves;
a second guiding plate, communicating with the fuel cell, including a plurality of second grooves so that gas from the fuel cell flows out of the unit cell via the second grooves, wherein the second grooves face the first grooves; and
an intermediate layer, disposed between the first guiding plate and the second guiding plate, for preventing the air flowing in the first grooves from mixing with the gas flowing in the second grooves, wherein water content in the gas flowing in the second grooves is transmitted to the first grooves.

2. The unit cell as claimed in claim 1, wherein the intermediate layer comprises:
a water-permeable layer for the water content of the gas flowing in the second grooves passing through; and
a first water-absorbent layer disposed on a surface, facing the second guiding plate, of the water-permeable layer, wherein the water content of the gas flowing in the second grooves is absorbed by the first water-absorbent layer.

3. The unit cell as claimed in claim 2, wherein the intermediate layer further comprises:
a second water-absorbent layer disposed on a surface, facing the first guiding plate, of the water-permeable layer, wherein the water content passing through the water-permeable layer is absorbed by the second water-absorbent layer.

4. The unit cell as claimed in claim 1, wherein the first grooves and the second grooves are orthogonal.

5. The unit cell as claimed in claim 1, wherein the first guiding plate includes a first opening and a second opening formed in a direction that the first grooves extend, and the second guiding plate includes a third opening and a fourth opening corresponding to the first opening and the second opening respectively, whereby the air flows into the first grooves via the first opening and the third opening, and flows out of the unit cell via the second opening and the fourth opening.

6. The unit cell as claimed in claim 1, wherein the second guiding plate includes a fifth opening formed in a direction that the second grooves extend, and the first guiding plate includes a sixth opening corresponding to the fifth opening, whereby the gas from the fuel cell flows into the second grooves via the fifth opening and the sixth opening.

7. The unit cell as claimed in claim 6, wherein the first guiding plate includes a seventh opening opposite from the sixth opening, whereby the gas flowing in the second grooves flowing out of the unit cell via the seventh opening.

8. The unit cell as claimed in claim 1, further comprising:
an expansion plate, disposed between the first guiding plate and the second guiding plate, including a plurality of third grooves facing the first guiding plate and a plurality of fourth grooves facing the second guiding plate.

9. The unit cell as claimed in claim 8, wherein the third grooves and the fourth grooves are orthogonal, and the third grooves and the first grooves are orthogonal, and the fourth grooves and the second grooves are orthogonal.

10. The unit cell as claimed in claim 8, wherein the expansion plate includes an eighth opening and a ninth opening extending in the same direction as the third grooves, and includes a tenth opening and a eleventh opening formed in a direction that the fourth grooves extend.

11. A module for humidifying a fuel cell, comprising:
a plurality of unit cells communicating with the fuel cell respectively, wherein each of the unit cells comprises:
a first guiding plate, communicating with the fuel cell, including a plurality of first grooves so that air flows to the fuel cell via the first grooves;
a second guiding plate, communicating with the fuel cell, including a plurality of second grooves so that gas from the fuel cell flows out of the unit cell via the second grooves, wherein the second grooves face the first grooves; and
an intermediate layer, disposed between the first guiding plate and the second guiding plate, for preventing the air flowing in the first grooves from mixing with the gas flowing in the second grooves, wherein water content in the gas flowing in the second grooves is transmitted to the first grooves.

12. The module as claimed in claim 11, wherein the intermediate layer comprises:
a water-permeable layer for the water content of the gas flowing in the second grooves passing through; and
a first water-absorbent layer disposed on a surface, facing the second guiding plate, of the water-permeable layer, wherein the water content of the gas flowing in the second grooves is absorbed by the first water-absorbent layer; and
a second water-absorbent layer disposed on a surface, facing the first guiding plate, of the water-permeable layer, wherein the water content passing through the water-permeable layer is absorbed by the second water-absorbent layer.

13. The module as claimed in claim 12, wherein the first water-absorbent layer and the second water-absorbent layer are adhered to the water-permeable layer.

14. The module as claimed in claim 12, wherein the water-permeable layer is made of material for preventing gas from passing through.

15. The module as claimed in claim 12, wherein the first water-absorbent layer and the second water-absorbent layer are made of a hydrophilic material.

16. The module as claimed in claim 11, wherein the intermediate layer is adhered to the first guiding plate and the second guiding plate.

17. The module as claimed in claim 11, further comprising:
an expansion plate, disposed between the first guiding plate and the second guiding plate, including a plurality of third grooves facing the first guiding plate and a plurality of fourth grooves facing the second guiding plate.

18. A unit cell, for humidifying a fuel cell, communicating with a fluid supply source and comprising:
a first guiding plate, communicating with the fuel cell, including a plurality of first grooves so that air flows to the fuel cell via the first grooves;
a second guiding plate, communicating with the fluid supply source, including a plurality of second grooves so that fluid from the fluid supplying device flows out of the unit cell via the second grooves, wherein the second grooves face the first grooves; and
an intermediate layer, disposed between the first guiding plate and the second guiding plate, for preventing the air flowing in the first grooves from mixing with the fluid flowing in the second grooves, wherein water content in the fluid flowing in the second grooves is transmitted to the first grooves.

19. The unit cell as claimed in claim 18, wherein the intermediate layer comprises:
a water-permeable layer for the water content of the fluid flowing in the second grooves passing through; and
a first water-absorbent layer disposed on a surface, facing the second guiding plate, of the water-permeable layer, wherein the water content of the fluid flowing in the second grooves is absorbed by the first water-absorbent layer; and
a second water-absorbent layer disposed on a surface, facing the first guiding plate, of the water-permeable layer, wherein the water content passing through the water-permeable layer is absorbed by the second water-absorbent layer.

20. The unit cell as claimed in claim 18, further comprising:
an expansion plate, disposed between the first guiding plate and the second guiding plate, including a plurality of third grooves facing the first guiding plate and a plurality of fourth grooves facing the second guiding plate.
